# EUROPEAN PATENT APPLICATION

(11) **EP 2 502 884 A1**
(43) Date of publication of application: **26.09.2012**
(21) Application number: 11191751.4
(22) Date of filing: 02.12.2011
(51) Int. Cl.: C02F 1/461, B01J 20/34

(54) **Regenerable filter unit for removing metal, regenerable filter system including same, and method of operating regenerable filter system**

(30) Priority: 21.03.2011 KR 20110024934
(71) Applicant: Samsung Electronics Co., Ltd., Suwon-si, Gyeonggi-do, 443-742 (KR)
(72) Inventor: Kim, Chang Hyun, Seoul (KR); Kang, Hyo Rang, Gyeonggi-do (KR); Kim, Hyun Seok, Seoul (KR); Yang, Ho Jung, Gyeonggi-do (KR); Lee, Joo Wook, Seoul (KR); Kim, Jae Eun, Seoul (KR)
(74) Representative: Grünecker, Kinkeldey, Stockmair & Schwanhäusser

(57) **Abstract**

A filter unit may include a water permeable first electrode (12), a second electrode (14) arranged so as to be spaced apart from and opposite to the first electrode (12), and a non-water permeable separator (13) that is positioned between the first electrode (12) and the second electrode (14). The first electrode (12) may include a metal adsorbent (metal-adsorbing material) and thus may adsorb a metal included in the water. At least one of the first electrode (12) and the second electrode (14) may induce a water hydrolysis reaction to produce H⁺ ions to regenerate the metal adsorbent. The filter unit may further include a voltage applier to provide a filter system.

## Description

### CROSS-REFERENCE TO RELATED APPLICATION

This application claims priority under 35 U.S.C. § 119 to Korean Patent Application No. 10-2011-0024934, filed in the Korean Intellectual Property Office on March 21, 2011.

### BACKGROUND

### 1. Field

A regenerable filter unit for removing a metal, a filter system being applicable for removing various heavy metals, and a method of operating the same are disclosed herein.

### 2. Description of the Related Art

The use of heavy metals has been increasing due to rapidly changing industrialization along with economic growth. Many heavy metals have an extensive influence on the human body and the ecosystem due to their relative toxicity, and also act as a serious pollutant to the environment such as rivers, soil, and the like.

Water pollution due to indiscriminate heavy metal discharge has caused worldwide problems for decades. Toxic metal elements exerting a particularly adverse influence on the human body and the ecosystem may include chromium (Cr), copper (Cu), lead (Pb), mercury (Pb), manganese (Mn), cadmium (Cd), nickel (Ni), and the like. The major sources of metal elements may include plating factories, smelting factories, leather factories, paint manufacturing factories, and the like. A relatively large amount of metals are also discharged in the preparation of beverages, ice cream, and the like. Furthermore, iron (Fe), zinc (Zn), copper (Cu), nickel (Ni), manganese (Mn), and the like are mainly discharged in mines.

Water pollution problems due to heavy metals are also exposed to the public. In general, clean water that is treated in a water treatment plant and satisfies drinking water standards is supplied to waterworks that supply cities and homes. However, it is possible for heavy metals such as copper (Cu), lead (Pb), zinc (Zn), cadmium (Cd), and the like that are leached from aged water pipes and the like to be included when the water is supplied to the user. Among them, lead (Pb), mercury (Hg), cadmium (Cd), and the like are known to have fatal toxicity if accumulated in the body.

Commonly used heavy metal treating methods include precipitation, adsorption, ion exchange, reverse osmosis, biological treatment, and the like. Among them, precipitation and adsorption are largely applied for industrial and public water purification, and biological treatment is partly used, but these are not appropriate for household water purification due to the problems of size reduction and ease of use. Therefore, reverse osmosis and ion exchange are generally used for household water purifiers.

Although a reverse osmosis filter used in a water purifier may completely remove most impurities, it may also remove healthful mineral components (Ca, Mg, and the like) existing in the water, and thus a post process of adding minerals to the purified water may be performed. Furthermore, using reverse osmosis with coincident high energy consumption for removal of a very small amount of heavy metals is unfavorable in terms of energy efficiency. If an ion exchange resin filter is used, it may selectively remove heavy metals and have a merit in terms of energy efficiency, but filter performance may be deteriorated even before the scheduled replacement time depending on the degree of pollution of the inflow water, and, thus, the likelihood of drinking heavy-metal-polluted water may increase. Above all, the filter requires periodical replacement, thus generating added costs and inconvenience to the user.

### SUMMARY

Various example embodiments relate to a filter unit that may selectively adsorb and remove metal ions existing in water with relatively high efficiency, and may be regenerated with relatively high efficiency.

Various embodiments relate to a filter unit that may improve processibility.

Various embodiments relate to a filter system including the filter unit.

Various embodiments relate to a relatively highly efficient method of operating the regenerable filter system

According to an example embodiment, a filter unit may include a water permeable first electrode including a metal adsorbent (metal-adsorbing material); a second electrode arranged so as to be spaced apart from and opposite to the first electrode; and a separator formed of an insulating material with fine pores that are positioned between the first electrode and the second electrode and that deliver ions in a direction penetrating the first electrode and the second electrode, wherein the separator is non-water permeable in a direction parallel to a side contacting the first electrode or the second electrode, and at least one of the first electrode and the second electrode is a catalyst supported electrode including a water hydrolysis catalyst or an inactive electrode including a non-catalyst material.

The water permeable first electrode may further include an inflow water inlet and a treated water outlet for passing inflow water in a water permeable direction.

The length of the water permeable first electrode may be about 1 cm to about 50 cm in a direction of inflow water introduction at the inflow water inlet, and a ratio (S1/S2) of the first cross-sectional area (S1) of the water permeable first electrode in a first direction (W1) perpendicular to the inflow water introduction direction (A) at the inflow water inlet and the second cross-sectional area (S2) of the separator in a second direction (W2) perpendicular to the inflow water introduction direction (A) at the inflow water inlet may be about 5 to about 1000.

The water permeable first electrode may be formed by depositing particles of the metal adsorbent, and may include pores with an average size of about 0.1 µm to about 30 µm formed between the particles, and may have a porosity of about 0.05 to about 0.7.

The water permeable first electrode may be in the form of a woven or non-woven fabric.

The metal adsorbent may include a basic functional group that selectively bonds to metal ions on the surface.

The metal adsorbent may be an activated or non-activated carbon-based material.

The water permeable first electrode may be selected from activated carbon, high specific surface area graphite, carbon nanotubes (CNT), mesoporous carbon, activated carbon fiber, a cation exchange resin, zeolite, smectite, vermiculite, or a combination thereof.

The water permeable first electrode may also be formed of a non-water permeable carbon-based material while including a separate water permeable flow path therein.

The non-water permeable carbon-based material may be particles of a carbon-based material with an average particle diameter of about 0.1 µm to about 50µm.

The first electrode may further include a current collector.

The separator may have an average pore size of about 0.1 µm to about 30 µm.

The separator may include at least one material selected from a polyolefin, glass fiber, and a metal oxide.

The separator may have a thickness of about 5 µm to about 300 µm between the first side contacting the first electrode and the second side contacting the second electrode.

The water hydrolysis catalyst or non-catalyst material may be selected from a metal, a metal oxide, stainless steel, glassy carbon, graphite, carbon black, or a combination thereof.

The water hydrolysis catalyst or non-catalyst material may be selected from platinum (Pt), titanium (Ti), ruthenium (Ru), silver (Ag), gold (Au), iridium (Ir), palladium (Pd), cobalt (Co), vanadium (V), iron (Fe), PtO₂, IrO₂, TiO₂, CaTiO₃, NaWO₃, MnO₂, RuO₂, PbO₂, or a combination thereof.

The second electrode may include a metal adsorbent and may be water permeable.

Alternatively, the second electrode may not include a metal adsorbent and may be not water permeable.

According to another embodiment, a filter system may include the above filter unit and a voltage applier configured to apply a voltage to the first electrode and the second electrode (e.g., at a regular time interval after operation of the filter unit to remove one or more metals from the inflow water).

The voltage applier may regenerate the metal adsorbent with the applied voltage.

The voltage applier may apply a voltage of a magnitude that enables or facilitates the hydrolysis of water between the first electrode and the second electrode.

According to another embodiment, a method of operating a filter system may include passing inflow water through the above filter unit without voltage application such that the metal adsorbent adsorbs a metal ion from the inflow water; and applying a voltage to the first electrode and the second electrode to desorb the metal ion from the metal adsorbent, thereby regenerating the metal adsorbent.

In the operating method of the filter system, the metal adsorbent may be regenerated by the voltage applied by the voltage applier under an inflow water condition without the introduction of an additional electrolyte.

In the step of applying a voltage to the first electrode and the second electrode, a voltage of a magnitude that enables or facilitates hydrolysis of water may be applied.

The pH of the surface of the first electrode and/or the second electrode may be locally controlled to about 5 or less by the voltage applied by the voltage applier so that the metal adsorbent may desorb the metal ion.

The surface of the first electrode and/or the second electrode may be oxidized by the voltage applied by the voltage applier so that a basic functional group may be produced.

### BRIEF DESCRIPTION OF THE DRAWINGS

FIG. 1 is a schematic diagram of a filter unit according to an example embodiment.

FIG. 2 shows a metal ion removal mechanism of the filter unit of FIG. 1.

FIG. 3 is a schematic diagram of a filter system according to an example embodiment.

FIG. 4 is a schematic diagram of a filter system according to another example embodiment.

FIG. 5 is a schematic diagram of a filter system according to another example embodiment.

FIG. 6 is a schematic diagram of a filter system according to another example embodiment.

FIG. 7 is a schematic diagram of a filter system according to another example embodiment.

FIG. 8 is a graph showing evaluation results of metal removal performance over time of Example 1.

FIG. 9 is a graph showing evaluation results of metal removal performance according to cycle of Example 1.

FIG. 10 is a graph showing impedance by frequency of the separator used in Example 1.

FIG. 11 is a graph showing current measured when the filter system of Example 1 is regenerated.

### DETAILED DESCRIPTION

Example embodiments will be described more fully hereinafter with reference to the accompanying drawings. The disclosure may, however, be embodied in many different forms and should not be construed as limited to the examples set forth herein.

In the drawings, the thickness of the layers, films, panels, regions, etc. may have been exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present. As used herein, the term "and/or" includes any and all combinations of one or more of the associated listed items.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, e.g., "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," '"an," and "the" are intended to include the plural forms as well, unless the context clearly indicates otherwise. It will be further understood that the terms, "comprises," "comprising," "includes," and/or "including," if used herein, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art. It will be further understood that terms, including those defined in commonly used dictionaries, should be interpreted as having a meaning that is consistent with their meaning in the context of the relevant art and will not be interpreted in an idealized or overly formal sense unless expressly so defined herein.

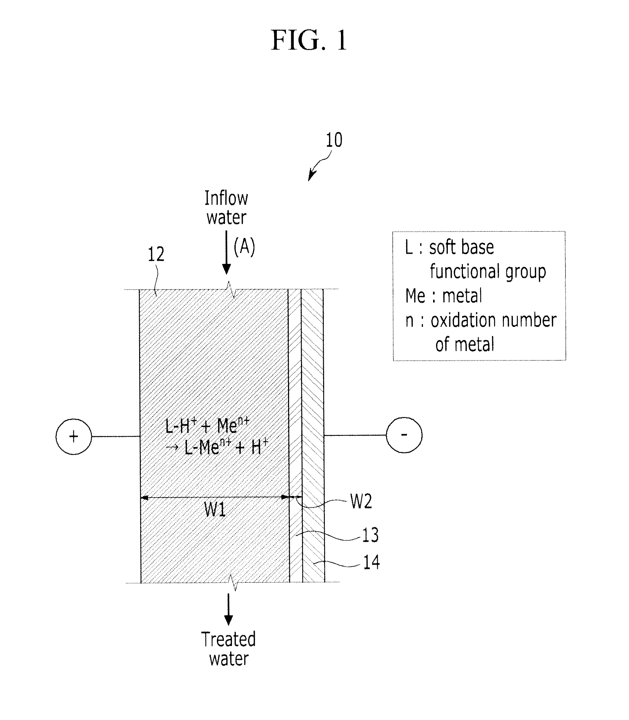

Hereinafter, a filter unit according to an example embodiment will be described with reference to FIG. 1.

FIG. 1 is a schematic diagram of a filter unit 10 according to an example embodiment.

Referring to FIG. 1, the filter unit 10 may include a water permeable first electrode 12, a second electrode 14 arranged so as to be spaced apart from and opposite to the first electrode 12, and/or a separator 13 positioned between the first electrode 12 and the second electrode 14.

The first electrode 12 may be water permeable so as to provide a flow path through which inflow water passes. The first electrode 12 may also include an adsorbent which adsorbs metals (e.g., metal-adsorbing material) in the inflow water passing through the flow path. The water permeable first electrode 12 may further include an inflow water inlet (not shown) and a treated water outlet (not shown) for passing the inflow water in a water permeable direction (A).

The second electrode 14 is arranged so as to be spaced apart from and opposite to the first electrode 12.

Since the first electrode 12 is water permeable, it may pass inflow water. For example, inflow water may be introduced into one side, and treated water may be discharged from the other side.

According to another embodiment, the thickness of the water permeable first electrode 12 may be about 1 cm to about 50 cm in a direction of the inflow water introduction (A) at the inflow water inlet, and the ratio (S1/S2) of the first cross-sectional area (S1) of the water permeable first electrode 12 in a direction (W1) perpendicular to the inflow water introduction direction (A) at the inflow water inlet and the second cross-sectional area (S2) of the separator in a direction (W2) perpendicular to the inflow water introduction direction (A) at the inflow water inlet may be about 5 to about 1000. For example, the ratio (S1/S2) may be about 50 to about 100. In another example, the ratio (S1/S2) may be about 10 to about 30. In another example, the ratio (S1/S2) may be about 2 to about 5. The magnitude of the first cross-sectional area (S1) of the water permeable first electrode 12 as such may provide the desired water permeability performance.

According to another embodiment, the water permeable first electrode 12 may be formed by depositing particles of an adsorbent which is designed to adsorb one or more metals. The first electrode 12 may be water permeable due to the pores formed between the deposited particles. The average size of the pores formed between the particles may be about 0.1 µm to about 30 µm, and the porosity may be about 0.05 to about 0.7. The porosity means a volume ratio of the pores to the entire volume including particles and pores.

According to another embodiment, the water permeable first electrode 12 may be in the form of a woven or non-woven fabric.

The adsorbent may include a basic functional group (oxygen-containing functional group) on the surface that selectively bonds to metal ions. The basic functional group selectively exhibits strong adsorption to acidic metal ions, particularly heavy metal ions. For example, a reaction in which a basic functional group, for example, -COO- or -O- (that may be derived from a functional group such as a carboxyl group, a hydroxyl group, and the like adsorbs heavy metal ions such as Pb²⁺ is represented by the following Reaction Scheme 1.

### [Reaction Scheme 1]

-COOH + Pb²⁺ + H₂O → -COOPb⁺ + H₃O⁺

C^{*}-OH + Pb²⁺ + H₂O → C^{*}-OPb⁺ + H₃O⁺

(-COOH)₂ + Pb²⁺ + 2H₂O → (-COO)₂Pb + 2H₃O⁺

C^{*}-O-C^{*} + 2H₂O → C₂OH₂²⁺ + 20H-

2 (C₂OH₂²⁺) + Pb²⁺ → (C₂O)₂Pb²⁺ + 4H⁺

The adsorbent may be an activated or non-activated carbon-based material.

According to another embodiment, the water permeable first electrode 12 including the adsorbent may be selected from activated carbon, high specific surface area graphite, carbon nanotubes (CNT), mesoporous carbon, activated carbon fiber, a cation exchange resin, zeolite, smectite, vermiculite, or a combination thereof. The high specific surface area graphite may have a specific surface area of about 100 m²/g to 300 m²/g.

Since the above-explained first electrode 12 has a structure enabling inflow water to pass relatively evenly through the whole electrode body, the adsorption capacity of the adsorbent included in the first electrode 12 may be maximally utilized to improve the metal removal rate and material utilization rate, thereby increasing the speed and capacity of handling metals per unit cell.

In addition to including the adsorbent made of water permeable material, the first electrode 12 may have various structures to provide water permeability so as to improve the passage of inflow water.

According to another embodiment, the first electrode 12 may be formed of a non-water permeable carbon-based material, and a water permeable flow path may be formed in the non-water permeable carbon-based material to allow passage of the inflow water. The non-water permeable carbon-based material may be formed of carbon-based material particles with a particle diameter of about 0.1 µm to about 50 µm. Although a part consisting of carbon-based material may be non-water permeable, a relatively fine flow path may be separately formed inside the first electrode 12 so that the first electrode 12 may become water permeable overall.

According to another embodiment, the first electrode 12 may further include a current collector. As the current collector, a known material may be used, such as, for example, Ti, stainless steel, graphite, glassy carbon, or an alloy or a mixture thereof, and the like, although example embodiments are not limited thereto.

The separator 13 may be positioned between the first electrode 12 and the second electrode 14. The separator 13 may be formed of an insulating material with relatively fine pores that deliver ions in a direction penetrating the first electrode and the second electrode. When a voltage is applied between the two electrodes 12, 14, an electric current may flow through the relatively fine pores of the separator 13.

The separator 13 may have an average pore size of about 0.01 µm to about 30 µm, e.g., about 0.1 µm to about 10 µm. Since inflow water is introduced into the first electrode 12, the separator 13 does not need to include an opening for introducing inflow water. Thus, the separator 13 does not need to be water permeable. In a non-limiting embodiment, the separator 13 may be non-water permeable in a parallel direction to the side contacting the first electrode 12 or the second electrode 14. For example, the separator 13 may be rendered non-water permeable based on its pore size (e.g., 0.01 to 0.09 µm).

Although a certain standard of thickness may be required for a water permeable material to ensure adequate strength, since the separator 13 may be formed to be non-water permeable, the separator 13 may be formed as a thin film without unnecessarily increasing the thickness. As the thickness of the separator 13 is thinner, cell resistance may be decreased, and as the result, when a voltage is applied for regenerating an adsorbent, the current may be increased to improve regeneration efficiency. Furthermore, since the separator 13 does not include an opening for introducing inflow water, the probability of a short circuit of an electrochemical cell may be minimized, thereby improving processibility during the manufacture of a system.

In the case of a separator 13 formed as a thin film, because the cross-section of the separator 13 is relatively narrow compared to the length of the separator 13, the separator 13 may be non-water permeable in a parallel direction to the side of the separator 13 contacting the first electrode 12 or the second electrode 14, or in a direction (A) where water is transmitted in the first electrode 12.

For example, the separator 13 may use a thin film with a thickness of about 5 µm to about 300 µm. Thus, the thickness of the separator 13 between the side contacting the first electrode 12 and the side contacting the second electrode 14 may be about 5 µm to about 300 µm. As such, since the separator 13 may be formed as a relatively thin film, cell resistance may be lowered.

The separator 13 may be formed of a polyolefin, glass fiber, a metal oxide, or a combination thereof, and the like.

At least one of the first electrode 12 and the second electrode 14 may be a catalyst supported electrode including a water hydrolysis catalyst or an inactive electrode including a non-catalyst material. The catalyst supported electrode including a water hydrolysis catalyst or the inactive electrode including a non-catalyst material may hydrolyze water to produce H⁺ ions when a voltage is applied. The H⁺ ions facilitate the desorption of the metal ions adsorbed to the basic functional group of the adsorbent, thereby regenerating the adsorbent.

The water hydrolysis catalyst may lower a water hydrolysis overvoltage and enable higher current operation under the same voltage during the after-mentioned voltage application process performed after metal ion adsorption. Furthermore, since the anode and the cathode have relatively low electric double layer capacitances, metal ions are not trapped and concentrated in the cathode pores during regeneration. As a result, the retention of desorbed metal ions after regeneration can be prevented which often occurs in electrodes with a relatively high electric double layer capacitance.

The water hydrolysis catalyst or the non-catalyst material may include a metal, a metal oxide, stainless steel, glassy carbon, graphite, carbon black, or a combination thereof. The combination may refer to a mixture, a stacking structure, and the like of two or more components. The metal may be selected from platinum (Pt), titanium (Ti), ruthenium (Ru), silver (Ag), gold (Au), iridium (Ir), palladium (Pd), cobalt (Co), vanadium (V), iron (Fe), or a combination thereof. The combination may refer to a mixture, an alloy, a stacking structure, and the like of two or more metals. The metal oxide may be selected from PtO₂, IrO₂, TiO₂, CaTiO₃, NaWO₃, MnO₂, RuO₂, PbO₂, or a combination thereof. The combination may refer to a mixture, a stacking structure, and the like of two or more metal oxides.

The second electrode 14 may be water permeable or non-water permeable, but it is not specifically limited to any one material.

According to another embodiment, the second electrode 14 may be water permeable and may include an adsorbent. In this case, inflow water may be passed through the water permeable second electrode 14 so that the adsorbent in the second electrode 14 may adsorb metals in the inflow water.

According to another embodiment, the second electrode 14 may be non-water permeable, and may not include an adsorbent.

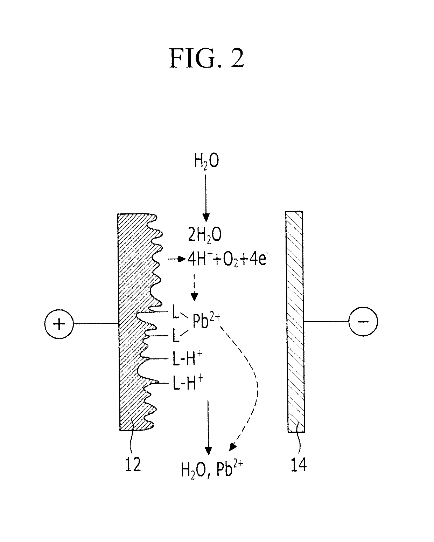

As shown in FIG. 2, if metal ions have been adsorbed to the basic functional group and the ion removal speed has decreased, a voltage may be applied between the first electrode 12 and th e second electrode 14 so that metal ions may be desorbed from the adsorbent. Specifically, the adsorbent may be regenerated in-situ by the voltage applied between the first electrode 12 and the second electrode 14.

A positive (+) voltage is applied to the first electrode 12 and a negative (-) voltage is applied to the second electrode 14 so as to induce a water hydrolysis reaction on the surfaces of the first electrode 12 and the second electrode 14. At this time, H⁺ ions are produced on the surface of the first electrode 12, which may locally decrease the pH of the electrode surface to about 5 or less. The metal ions that are adsorbed to the basic functional groups may be desorbed through competing reactions and discharged. Furthermore, the filter system may be short-circuited so as to facilitate metal ion discharge.

A surface oxidation reaction, as well as a water hydrolysis reaction, may occur on the surface of the first electrode 12. More basic functional groups may be introduced on the surface of the first electrode 12 by the surface oxidation reaction. Specifically, the production of basic functional groups that may adsorb metal ions to the first electrode 12 may be electrochemically induced. In case the adsorbent in the first electrode 12 is a carbon-based material such as activated carbon, high specific surface area graphite (HSAG), carbon nanotubes (CNT), mesoporous carbon, activated carbon fiber, and the like, a basic functional group having an oxygen/carbon (O/C) atomic ratio of about 0.02 or more found by XPS surface analysis may be introduced. According to an embodiment, a basic functional group having an O/C atomic ratio of about 0.03 to 0.2 may be introduced.

The filter unit 10 may not need an additional electrolyte solution to desorb metals from the adsorbent during regeneration. This is because the metals may be desorbed from the adsorbent by H⁺ ions produced by hydrolyzing the water of the inflow itself.

The filter unit 10 may selectively remove metal ions existing in the inflow water with an adsorbent, and the adsorbent may be regenerated by applying a voltage while flowing the inflow water. Thus, the filter unit 10 does not require regular replacement and may be useful for a water purification system.

According to another embodiment, a filter system may be provided that includes the above-explained filter unit 10 and a voltage applier for applying a voltage to the first electrode 12 and the second electrode 14 at a regular time interval after operation of the filter unit 10.

In FIG. 1 and FIG. 2, symbols '+' and '-' which are connected respectively to the first electrode 12 and the second electrode 14 indicate the voltage applier.

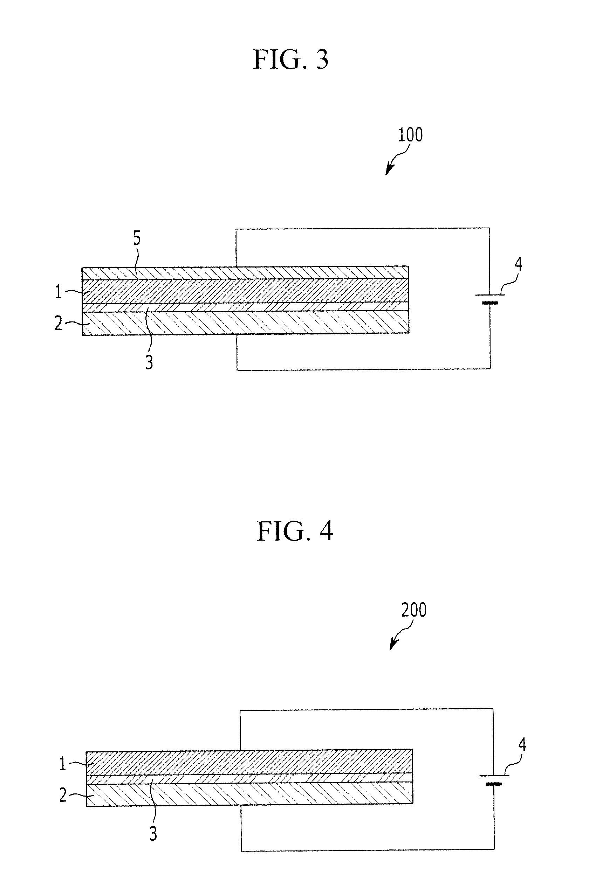

FIG. 3 is a schematic view of a filter system 100 according to an example embodiment. The filter system 100 may include a first electrode 1, a separator 3, a second electrode 2, and a voltage applier 4. The first electrode 1 may be a layer including an adsorbent (e.g., metal-adsorbing material) and a current collector 5. The voltage applier 4 is configured to apply a voltage when regenerating the adsorbent. FIG. 4 shows another embodiment of a filter system 200 wherein a current collector 5 shown in FIG. 3 is excluded.

A regeneration reaction of the adsorbent by water hydrolysis reaction may be operated by applying a voltage with the voltage applier 4.

The regeneration reaction of the adsorbent may be performed by applying a voltage of a magnitude that enables hydrolysis of water between the first electrode 1 and the second electrode 2 through the voltage applier 4.

Voltage application of the voltage applier 4 may be performed after the metal adsorption reaction has proceeded according to desired conditions (for example, after a desired amount of time, or according to a desired concentration of metal ions or mineral components), and a condition of voltage applying time may be determined by considering the amount of adsorbent, metal ion composition in the inflow water, flow rate of treated water, and the like. The filter system 100, 200, 300, 400 may further include a sensor (or a monitoring system) that may detect fluidic characteristics of the treatment water. The voltage application may be performed by applying a pulse voltage for about 0.1 seconds to about 5 minutes.

A concentration of metal ions (e.g., heavy metal ions) in the treated water may be measured (or monitored), and it may be designed that a voltage may be applied if the concentration of metal ions is above a drinking water standard, and that a voltage may be applied if the concentration of metal ions or mineral components of the treated water is not appropriate for drinking water. The filter system 100, 200, 300, 400 may further include a sensor (or a monitoring system) that may detect a concentration of metal ions (or mineral components).

The voltage applier 4 may apply a voltage of a magnitude that allows hydrolysis of water between the first electrode 1 and the second electrode 2. The voltage of a magnitude that allows hydrolysis of water may be about 1.23 V or more, for example about 2 V to about 30 V.

The filter system 100, 200, 300, 400 may electrochemically regenerate the performance of the adsorbent by applying a voltage between the first electrode 1 and the second electrode 2 without dismantling the system. Furthermore, it may regenerate the performance of the adsorbent under inflow water conditions without using an additional electrolyte. As described, since a metal adsorption process and a regeneration process of a basic functional group for removing adsorbed metals may be performed by in-situ processes, metal ions (particularly heavy metal ions) may be selectively removed by a relatively convenient method. If metal ions are removed in this way, the filter system 100, 200, 300, 400 may be semi-permanently used, and a filter device that may decrease the maintenance cost of a filter may be provided.

The filter system may be formed by stacking filter units.

Since the filter system 100, 200, 300, 400 may maximally manifest the capacity of the adsorbent, the stack of the filter units may be minimized, and the thickness may be decreased using a non-water permeable separator 3 thus decreasing cell resistance to improve regeneration efficiency. Furthermore, since an opening may not be formed in the separator 3, the probability of a cell short circuit may be minimized to improve processibility.

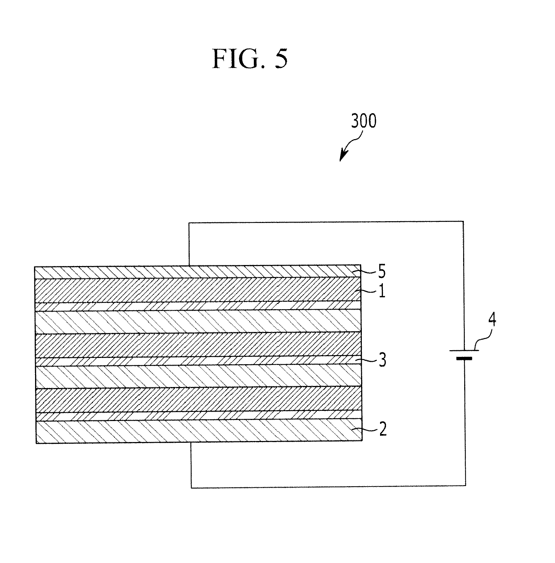

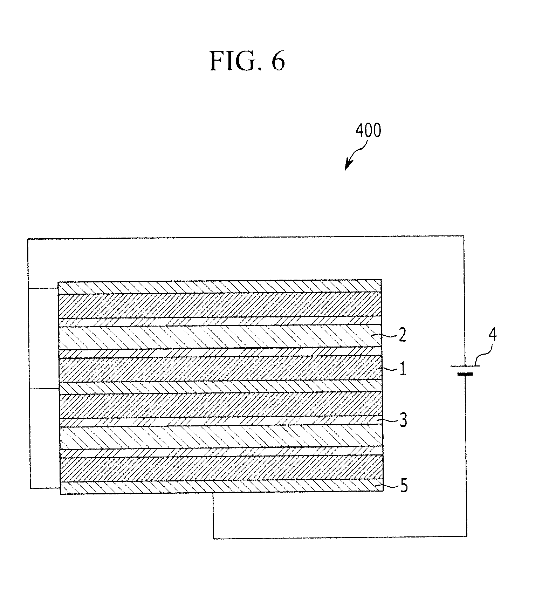

Non-limiting variations of the filter system are shown in FIG. 5 and FIG. 6. FIG. 5 shows a filter system 300 including filter units including a first electrode 1 (including a layer including an adsorbent), a second electrode 2, a separator 3, a voltage applier 4, and a current collector 5, which are electrically connected in series. FIG. 6 shows a filter system 400 including a first electrode 1 (including a layer including an adsorbent), a second electrode 2, a separator 3, a voltage applier 4, and a current collector 5, which are electrically connected in parallel.

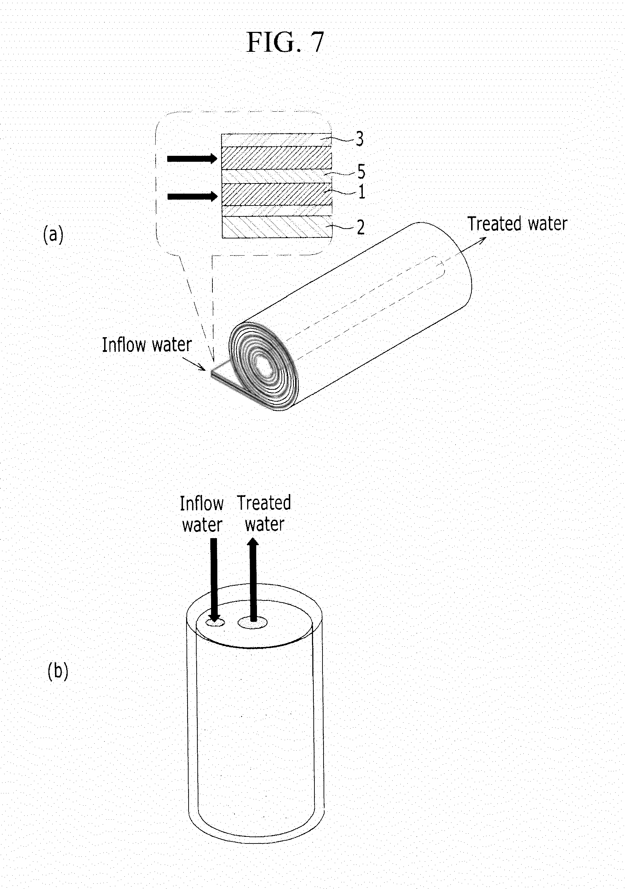

In FIG. 7, (a) and (b) show other example embodiments of the filter systems, wherein the filter units with a stacking structure indicated by a dotted line are helically wound and introduced into a case so as to introduce inflow water and discharge treated water in the direction indicated by the arrows. Although not illustrated, a voltage applier may be connected as described in connection with previous examples.

According to another embodiment, a method of operating a filter system 100, 200, 300, 400 is provided that includes passing inflow water through the filter unit without voltage application for the adsorbent to adsorb a metal ion and applying a voltage to the first electrode 1 and the second electrode 2 to cause the adsorbent to desorb the metal ion, thereby regenerating the adsorbent.

The following merely highlights an aspect of the various example embodiments in more detail. Therefore, it should be understood that the scope of the disclosure is not to be limited to these examples.

### (Example)

### Preparation Example 1: Preparation of a water permeable electrode

As a water permeable electrode, a commonly used activated carbon cloth CH900 is cut to about 10x10 cm² and used.

### Preparation Example 2: Preparation of a paste electrode

In an agitation vessel, about 45 g of carbon for adsorption, about 5 g of carbon black, about 4.17 g of PTFE suspension (60%), and about 100 g of propylene glycol are added and then kneaded and molded, and dried in a convection oven where the temperature was maintained at about 80, about 120, and about 200°C for 1 hour, respectively, to prepare sheet type filter electrodes with an area of about 10x10 cm² and weight of about 2.5 g

### Example 1

About 1.62 g of an activated carbon cloth with a thickness of about 480 µm is used as a filter electrode, a non-water permeable separator with a thickness of about 25 µm (polyethylene mat erial: manufactured by GORE Company) is used, IrO₂ coated Ti is used as a counter electrode, and 1 cell is stacked in the order of graphite foil/filter electrode/separator/counter electrode, and then combined with a screw to assemble a filter system. The outside part on the filter electrode is formed as the whole opening so as to introduce inflow water, and an outlet is formed and operated so that the introduced inflow water may be discharged through a hole in the electrode center after being transmitted through the filter electrode.

### Comparative Example 1

First, the activated carbon cloth used in Example 1 is ball milled at about 1000 rpm for about 15 minutes using a ZrO₂ ball, the obtained pulverized powder is mixed with 1,2-propanediol to prepare a paste mixture with a weight ratio of carbonaolvent:PTFE (polytetrafluoroethylene) binder of about 50: about 100: about 5, the paste mixture is prepared into an electrode and dried, and the solvent is removed, and then the electrode is cut to obtain a paste electrode with a thickness of about 430 µm and a weight of about 2.45 g. A filter system is assembled by the same method as Example 1, except that the above-prepared paste electrode is used as a filter electrode and a water permeable polyester separator (SEFAR Company) with a thickness of about 142 µm is used as a separator. In the same manner as Example 1, the outside part on the filter electrode is formed as the whole opening so as to introduce inflow water, and an outlet is formed and operated so that the introduced inflow water may be discharged through a hole in the electrode center after being transmitted through the filter electrode.

### Comparative Example 2

A filter system is assembled by the same method as Comparative Example 1, except that about 2.19 g of activated carbon with a particle diameter of about 20 µm is used and a filter electrode with a thickness of about 420 µm is used. In the same manner as Example 1, the outside part on the filter electrode is formed as the whole opening so as to introduce inflow water, and an outlet is formed and operated so that the introduced inflow water may be discharged through a hole in the electrode center after being transmitted through the filter electrode.

### Experimental Example 1: Evaluation of metal removal performance.

1. The system is operated at room temperature, and inflow water is prepared such that the concentration of Pb in the form of ions may become about 3 ppm in distilled water. The inflow water is supplied to the system at a speed of about 10 mL/min.
2. Residual Pb concentration of treated water is measured over time to confirm change in Pb removal performance, and if the Pb removal performance remarkably decreases, a regeneration process is performed.
3. The regeneration is progressed while voltages of about 5 V / 0 V are respectively maintained for about 10 minutes so that an adsorption electrode may be an anode, under a mimic tap water condition with conductivity of about 210 uS/cm. The mimic tap water is to conduct an experiment with the same inflow water condition, wherein CaCl₂, MgSO₄, and NaHCO₃ are respectively added to distilled water so that the concentrations may become respectively about 48.6 ppm, about 18.2 ppm and about 66.0 ppm
4. After regeneration, Pb inflow water of about 3 ppm is passed again at the same speed and Pb removal amount is confirmed to confirm recovery of Pb removal performance.

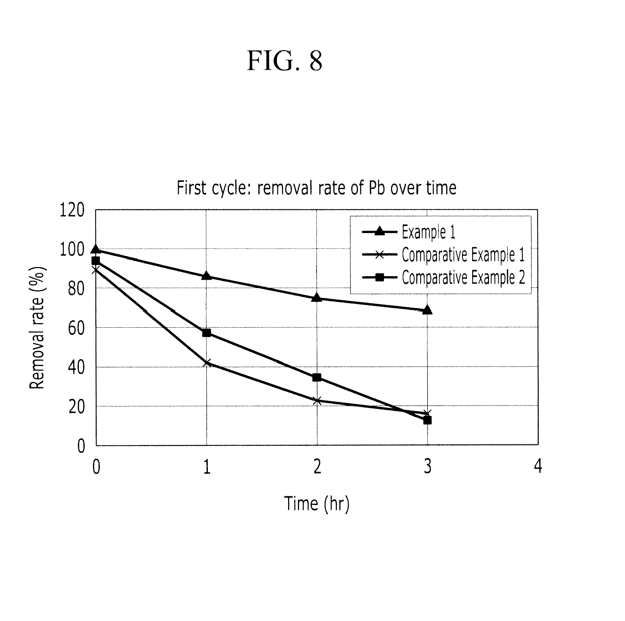

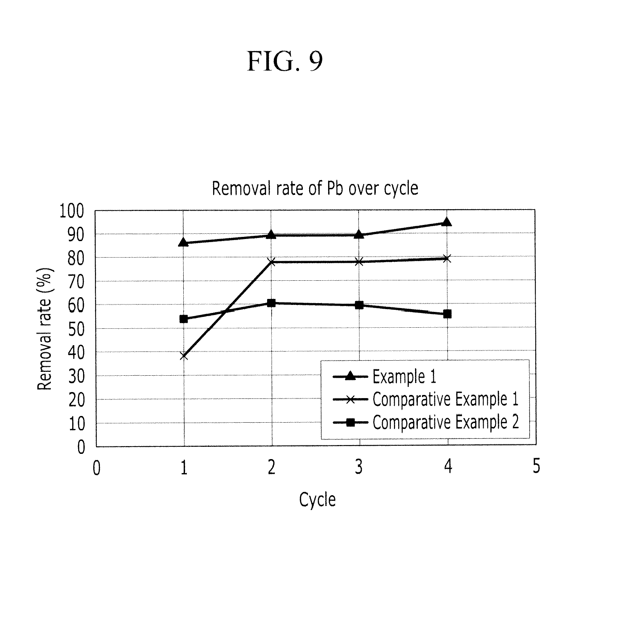

The results of Example 1 are shown in FIG. 8 and FIG. 9.

FIG. 8 is a graph showing Pb removal performances of treated water over time in the first cycles of Example 1 and Comparative Examples 1 and 2. In case a filter system consists of a water permeable electrode and a non-water permeable separator as Example 1, it is confirmed that the loading amount of an adsorption electrode is the lowest, while removal rate over time is maintained highest. To the contrary, if a water permeable separator is used with the non-water permeable paste type electrodes of Comparative Example 1 wherein the same carbon-based material is used and Comparative Example 2 wherein commonly-used activated carbon powder is used, it can be seen that the Pb removal rate rapidly decreases over time and thus the utilization rate of the adsorbent decreases.

FIG. 9 is a graph showing the Pb removal rate according to cycle of Example 1, Comparative Example 1, and Comparative Example 2, and it is confirmed that although Pb removal rates are all recovered through regeneration in Example 1, Comparative Example 1, and Comparative Example 2, an excellent Pb removal rate of Example 1, as confirmed in FIG. 8, is continuously maintained even if cycles are repeated.

### Experimental Example 2: Measurement of impedance according to separator

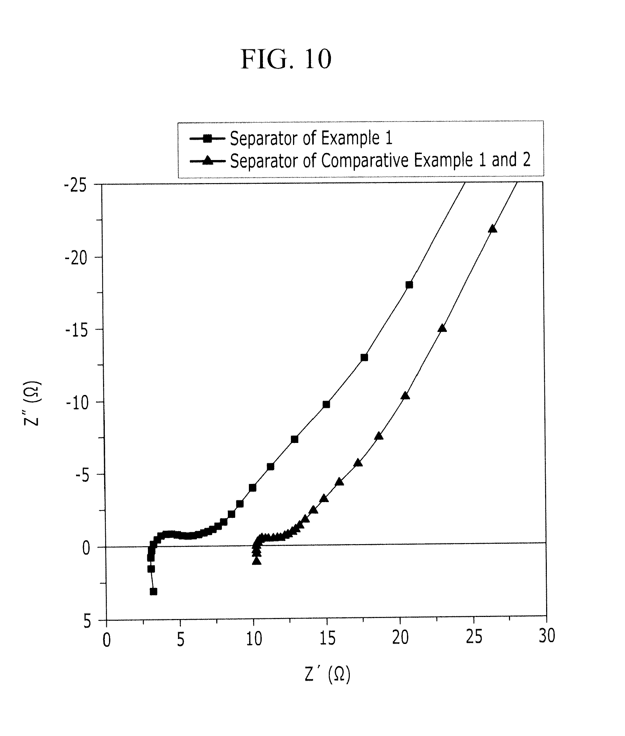

For the supercapacitors using the separator of Example 1 and separators of Comparative Examples 1 and 2 wherein mimic tap water of Experimental Example 1 is used as an electrolyte, impedance is shown according to frequency (FIG. 10). From the results of FIG. 10, it can be seen that even if an opening does not exist, the resistance of the non-water permeable separator of Example 1 with a thin thickness is about 1/3 smaller than Comparative Example 1.

### Experimental Example 3: Evaluation of regeneration performance according to separator

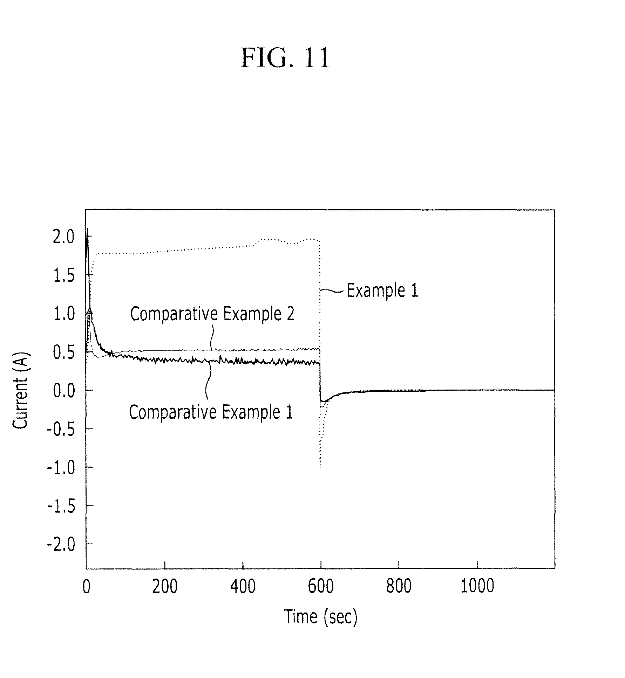

The mimic tap water of Example 1 is introduced at a flow rate of about 10 mL/min into the filter systems manufactured in Example 1, Comparative Example 1, and Comparative Example 2, the systems are operated, and current is measured when a voltage is applied, i.e., an adsorbent is regenerated. FIG. 11 is a graph showing the results. In Example 1, a significant current increase is observed in the regeneration cycle under the same voltage compared to Comparative Examples 1 and 2, which is believed to result from an ohmic resistance decrease due to the thin thickness of the separator.

While various example embodiments have been described herein, it is to be understood that the scope of the disclosure is not limited to the disclosed embodiments. In particular, the disclosure is intended to cover the various modifications that would fall within the scope of the appended claims.

### <Description of Symbols>

| | |
|---|---|
| 1: first electrode | 2: second electrode |
| 3: separator | 4: voltage applier |
| 5: current collector | 12: first electrode |
| 14: second electrode | |
| 100, 200, 300, 400: filter system | |

## Claims

1. A filter unit (10) comprising:
a first electrode (12, 1) including a metal-adsorbing material, the first electrode being water permeable;
a second electrode (14, 2) spaced apart from the first electrode, at least one of the first electrode and the second electrode being a catalyst supported electrode including a water hydrolysis catalyst or an inactive electrode including a non-catalyst material; and
a separator (13, 3) between the first electrode and the second electrode, the separator being formed of an insulating material with pores that deliver ions to the first electrode and the second electrode, the separator being non-water permeable in a direction parallel to a side contacting the first electrode or the second electrode.

2. The filter unit of claim 1, wherein the first electrode further comprises an inflow water inlet and a treated water outlet for passing inflow water in a direction of water permeation;
wherein, preferably, a length of the first electrode is about 1 cm to about 50 cm in an inflow water introduction direction, and a ratio (S1/S2) of a first cross-sectional area (S1) of the first electrode in a direction perpendicular to the inflow water introduction direction and a second cross-sectional area (S2) of the separator in the direction perpendicular to the inflow water introduction direction is about 5 to about 1000.

3. The filter unit of claim 1 or 2, wherein the first electrode comprises particles of the metal-adsorbing material and pores between the particles, the pores having an average size of about 0.1 µm to about 30 µm, the first electrode having a porosity of about 0.05 to 0.7; and/or
wherein the first electrode is in a form of a woven or non-woven fabric; and/or wherein the metal-adsorbing material comprises a basic functional group on an outer surface that selectively bonds to metal ions; and/or
wherein the metal-adsorbing material is an activated or non-activated carbon-based material; and/or
wherein the first electrode is at least one of activated carbon, high specific surface area graphite, carbon nanotubes (CNT), mesoporous carbon, activated carbon fiber, a cation exchange resin, zeolite, smectite, and vermiculite.

4. The filter unit of one of claims 1 to 3, wherein the first electrode includes a non-water permeable portion and a water permeable portion extending through the non-water permeable portion, the non-water permeable portion being a carbon-based material, the water permeable portion being a flow path;
wherein, preferably, the carbon-based material includes particles with an average diameter of about 0.1 µm to about 50 µm.

5. The filter unit of one of claims 1 to 4, wherein the first electrode further comprises a current collector (5).

6. The filter unit of one of claims 1 to 5, wherein the separator has an average pore size of about 0.1 µm to about 30 µm; and/or
wherein the separator comprises at least one material selected from a polyolefin, glass fiber, and a metal oxide; and/or
wherein the separator has a thickness of about 5 µm to about 300 µm between a first side contacting the first electrode and a second side contacting the second electrode.

7. The filter unit of one of claims 1 to 6, wherein the water hydrolysis catalyst or non-catalyst material is selected from a metal, a metal oxide, stainless steel, glassy carbon, graphite, carbon black, or a combination thereof;
in particular, wherein the water hydrolysis catalyst or non-catalyst material is selected from platinum (Pt), titanium (Ti), ruthenium (Ru), silver (Ag), gold (Au), iridium (Ir), palladium (Pd), cobalt (Co), vanadium (V), iron (Fe), PtO₂, IrO₂, TiO₂, CaTiO₃, NaWO₃, MnO₂, RuO₂, PbO₂, or a combination thereof.

8. The filter unit of one of claims 1 to 7, wherein the second electrode comprises a metal-adsorbing material and is water permeable; or
wherein the second electrode does not comprise a metal-adsorbing material and is not water permeable.

9. A filter system (100, 200, 300, 400) comprising:
the filter unit of one of claims 1 to 8; and
a voltage applier (4) configured to apply a voltage to the first electrode and the second electrode.

10. The filter system of claim 9, wherein the voltage applier is configured to regenerate the metal-adsorbing material with the voltage.

11. The filter system of claim 9 or 10, wherein the voltage applier is configured to apply a voltage of a magnitude that facilitates hydrolysis of water between the first electrode and the second electrode.

12. A method of operating a filter system, the method comprising:
passing inflow water through the filter unit of one of claims 1 to 8 without applying a voltage such that the metal-adsorbing material adsorbs a metal ion from the inflow water; and
applying a voltage to the first electrode and the second electrode to desorb the metal ion from the metal-adsorbing material so as to regenerate the metal-adsorbing material.

13. The method of claim 12, wherein the applying a voltage is performed without introducing an electrolyte into the inflow water.

14. The method of claim 12 or 13, wherein the applying a voltage includes applying a voltage of a magnitude that facilitates hydrolysis of water between the first electrode and the second electrode; and/or
wherein the applying a voltage includes controlling a pH of a surface of at least one of the first electrode and the second electrode to about 5 or less with the voltage so as to desorb the metal ion from the metal-adsorbing material; and/or
wherein the applying a voltage includes oxidizing a surface of at least one of the first electrode and the second electrode with the voltage so as to produce a basic functional group.
